(19) Europäisches Patentamt
European Patent Office
Office européen des brevets

(11) Publication number: **0 179 336 B1**

(12) # EUROPEAN PATENT SPECIFICATION

(45) Date of publication of patent specification: **29.03.89**

(51) Int. Cl.$^4$: **C 21 C 5/52,** C 21 C 7/00

(21) Application number: **85112613.6**

(22) Date of filing: **04.10.85**

(54) **Method of refining molten steel by arc process.**

(30) Priority: **12.10.84 JP 213336/84**
**12.10.84 JP 213337/84**

(43) Date of publication of application:
**30.04.86 Bulletin 86/18**

(45) Publication of the grant of the patent:
**29.03.89 Bulletin 89/13**

(84) Designated Contracting States:
**DE FR GB IT**

(56) References cited:
**FR-A-2 393 851**
**US-A-4 212 665**
**RESEARCH AND DEVELOPMENT IN JAPAN - THE OKOCHI MEMORIAL FOUNDATION, 1982, pages 22-28, Tokyo, JP; N. URUSHIYAMA et al.: "Development of a reduction refining process for molten steel in a ladle furnace - The LF process-"**
**PATENTS ABSTRACTS OF JAPAN, vol. 8, no. 218 (C-245) 1655r, 4th October 1984; & JP - A - 59 104 420 (SHIN NIPPON SEITETSU K.K.) 16-06-1984**

(73) Proprietor: **NIPPON KOKAN KABUSHIKI KAISHA**
**1-2 Marunouchi 1-chome Chiyoda-ku**
**Tokyo 100 (JP)**

(72) Inventor: **Nakashima, Hirohisa**
**5-6-D-213, Isegaoka**
**Fukuyama-shi Hiroshima-ken (JP)**
Inventor: **Komatsu, Yoshimi**
**456-4-F-1402, Hikino-cho**
**Fukuyama-shi Hiroshima-ken (JP)**
Inventor: **Ikeda, Masafumi**
**456-4-F-1305, Hikino-cho**
**Fukuyama-shi Hiroshima-ken (JP)**
Inventor: **Kondo, Tsuneo**
**456-4-F-1101, Hikino-cho**
**Fukuyama-shi Hiroshima-ken (JP)**

(74) Representative: **Sajda, Wolf E., Dipl.-Phys. et al**
**MEISSNER, BOLTE & PARTNER**
**Widenmayerstrasse 48 Postfach 86 06 24**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 179 336 B1**

Courier Press, Leamington Spa, England.

## Description

The invention relates to a process for refining molten steel by an arc process, comprising the following steps:

tapping the molten steel into a refining ladle,

dipping carbon electrodes into slag formed on the molten steel,

forming an arc between the electrodes and the molten steel to heat the molten steel, and

injecting an inert gas into the molten steel during the metallurgical process performed in the ladle.

In a conventional refining process, in order to adjust the content of niobium (Nb), vanadium (V) or chromium (Cr) in molten steel, molten steel is tapped from a blast furnace such as a converter or an electric furnace into a refining ladle and then a ferro alloy containing Nb, V or Cr is added to the molten steel.

However, the ferro alloy is expensive since it must be manufactured such that ore containing an alloy component must be refined by an electric furnace or the like.

A process as defined above is known from "Research and Development in Japan—The Okochi Memorial Foundation", Tokyo 1982, pages 22—28. In this document, the so-called ladle furnace process is described which provides reduction refining of molten steel in a sealed ladle having electrodes dipped into the slag covering the steel melt by arc heating and injecting argon gas to accelerate the slag metal reaction. According to this publication Al metal was added to the steel during the process which allows large addition of alloys and a perfect recovery of alloying elements. However, this document is silent as to the addition of alloying elements in the form of ore. Accordingly, nothing can be found in this document as to adding an alloying element in the form of cheap ore instead of expensive ferro alloys.

From another publication, namely FR—A—2 393 851 it is known in principle to add an alloying element in the form of cheap ore instead of expensive ferro alloy in a similar electro arc furnace process for the production of chromium alloyed steel. In that case, a hollow electrode is used having a passage therein through which the chromium containing alloy is fed while an arc is created between the electrode and the molten steel. The respective alloying elements are just flowing through the electrode and nothing can be found in this document as to injecting a gas carrying a powder or particles of ore containing specific components through rod-shaped carbon electrodes.

Accordingly, the object underlying the invention is to provide for an improved process of refining molten steel by an arc process wherein expensive ferro alloys can be replaced by powder or particles of ore containing the desired component to be added without impairing the metallurgical process.

This object is solved according to the invention by a process characterized by the following features: using carbon electrodes each of which is formed as a rod, wherein a gas injection port is formed at a lower end of the rod, and a gas path for supplying a gas to the gas injection port is formed in the rod; and injecting, from the gas injection port through the gas path, the gas carrying a powder or particles of ore containing a component to be added to the molten steel for a predetermined period of time within an arc heating period.

In this case, an arc region between the molten steel and the electrodes is kept at a temperature of about 3000°C. The powder or particles of the ore which are injected from the gas injection port at the lower end of the rod are heated through the arc region. Ore reduction caused by electrode carbon occurs between the ore and the electrodes. The reduction produces CO, which can be removed as CO gas. On the other hand, a metal component in the ore is added to the molten steel.

With the above process, even if an inexpensive ore is used in place of an expensive ferro alloy so as to adjust the components of the molten steel, the ore reacts with the carbon electrodes through a high-temperature arc region. The ore is reduced by carbon, so that a desired component can be added to the molten steel. Furthermore, since the ore can be reduced by carbon of the electrodes, a special reducing agent need not be added to reduce the ore. In a conventional arc process, carbon of the carbon electrodes tends to sublimate due to arc heat. The sublimated carbon is picked up into the molten steel to increase a carbon concentration of the molten steel. According to the present invention, however, since the carbon consumed by reduction is a part of the sublimated carbon in the conventional arc process, the content of carbon picked up in the molten steel can be decreased.

According to a further development of the process according to the invention the gas injected from the injection ports of the electrodes is used having a flow rate of 500 to 4000 Nl/min and a pressure of $4 \cdot 10^5$ to $2{,}5 \cdot 10^6$ Pa.

In the process according to the invention it is preferred that a gas path is used which is coaxial with the rod. According to a further aspect of the process according to the invention an ore is used which is selected from the group consisting of $Nb_2O_5$, $V_2O_5$ and $Cr_2O_5$.

According to a further development of the process according to the invention a reducing agent is used which is selected from the group consisting of Al, Si and C.

According to another aspect of the process according to the invention the ore carrying gas injected through the gas path comprises argon gas or another inert gas, or nitrogen when the molten steel is free from the problem of nitrogen pickup.

According to a further development of the process according to the invention additional gas is fed into the molten steel through a lance in order to stir the molten steel. In such an embodiment, it is preferred that this gas contains argon. Moreover, it is advantageous when this gas is used at a flow rate of 1000 to 2000 Nl/min.

The invention can be more fully understood from the following detailed description when taken in conjunction with the accompanying drawings, in which:

Fig. 1 is a sectional view showing an embodiment of the present invention; and

Fig. 2 is a sectional view showing a part of an electrode used in the structure of Fig. 1.

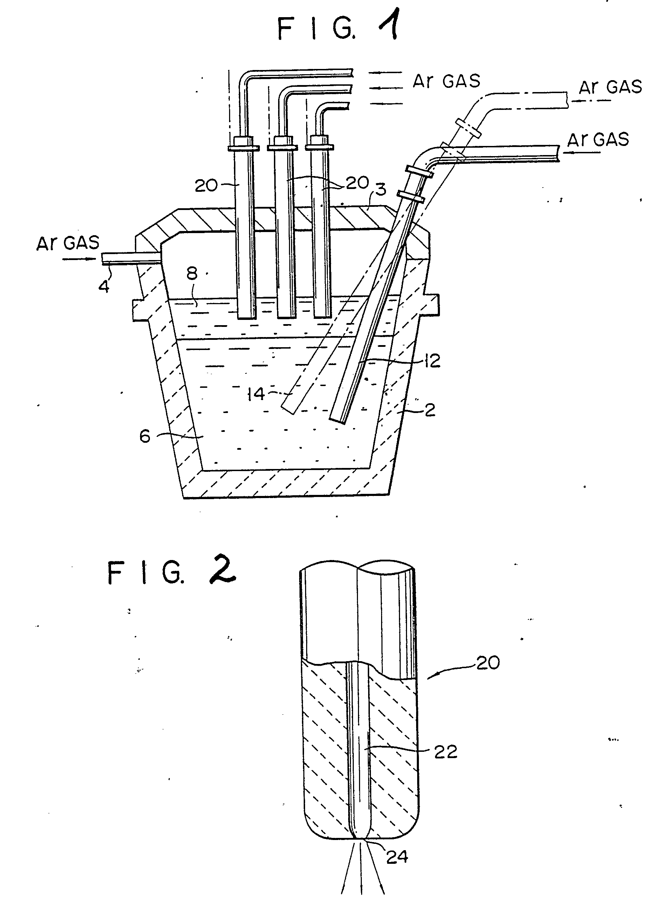

Fig. 1 is a sectional view showing a state wherein molten steel 6 is refined in an arc process. The molten steel 6 is tapped from a converter into a refining ladle 2. In the arc process, a cover 3 is placed on the refining ladle 2, and an inert gas is supplied to the ladle through a supply pipe 4 connected to an inert gas source (not shown) such as an Ar gas source. The interior of the ladle 2 is held in the inert gas (e.g., Ar gas) atmosphere. On top of the molten steel 6 slag 8 is formed as indicated in Fig. 2.

Electrodes 20 are made of a carbon material and have a rod-like shape. Each electrode 20 has a central gas path 22 extending along its longitudinal direction. The gas path 22 constitutes a gas injection port 24 at a lower end of each electrode 20. The upper end of the gas path 22 is connected to an Ar gas source through a connecting means such as a pipe. An adding means (not shown) is arranged in the connecting means to add a powder or particles of ore to Ar gas flowing through the connecting means. The Ar gas carrying the powder or particles of the ore is injected from the supply port 24 through the gas path 22 formed in each carbon electrode 20. The ore contains a component to be added to molten steel 6 and can be exemplified by $Nb_2O_5$, $V_2O_5$ or $Cr_2O_3$. A flow rate of Ar gas is 500 to 4 000 Nl/min and normally 2 000 Nl/min. A spray pressure at the supply port 24 is 4 to 25 $10^5$ Pa, and normally 8 $10^5$ Pa.

A weak stirring lance 12 is inclined and inserted in the refining ladle 2, and a lower portion of the lance 12 is dipped in the molten steel 6. The lance 12 is inserted so that the lower end thereof is located at a position separated by about 900 mm from the center along the horizontal direction and by 800 mm from the bottom of the ladle 2 along the vertical direction. The lance 12 is inclined at an angle of 8,8° with respect to the vertical direction. An inert gas such as Ar gas is supplied to the molten steel 6 through the lance 12 to weakly stir the molten steel. At the same time, the electrodes 20 are energized to form an arc between the molten steel 6 and the electrodes 20, thereby arc heating the molten steel 6. The arc region is heated to a high temperature of 3 000°C, so that the lower end portions of the carbon electrodes 20 are heated to a high temperature. The ore powder or particles are carried in the Ar gas, and a mixture is sprayed from the injection ports into the molten steel 6. The powder or particles pass through the lower vicinity of the electrodes 20 and the arc region which are kept at a high temperature. The ore is heated and reduced by carbon of the electrodes 20 between the ore and the electrodes 20. When Cr ore is used, the reduction occurs according to the following formula:

$$Cr_2O_3+3C \rightarrow 3CO+2Cr$$

CO is removed as CO gas, and Cr is added to the molten steel 6. When arc heating and weak stirring are continued for about 10 minutes to 20 minutes, arc heating is interrupted. The reaction between the electrodes 20 and the ore oxidizes and wears the electrodes 20. However, even in the conventional arc process wherein the ore powder is not injected from the electrodes, carbon sublimates by a high temperature of the electrodes upon formation of an arc, so that 0,28 kg of carbon are consumed per ton of molten steel for one charge. Some portion of the sublimated carbon is introduced into the molten steel to increase the carbon content. According to this embodiment of the present invention, however, electrode carbon is removed as CO gas, thereby decreasing carbon pickup by the molten steel 6. The portion of carbon consumed by oxidation is the same as that consumed in the conventional process. Therefore, carbon consumption is not large as compared with that of the conventional arc process.

Thereafter, a strong stirring lance 14 is dipped into the molten steel 6, and Ar gas is supplied to the molten steel at a relatively high flow rate, thereby strongly stirring the molten steel 6. After the electrodes 20 and the lance 12 have been removed from the ladle 2, a lance 14 is inserted so that a lower supply port is located at a central position along the horizontal direction of the ladle 2 and separated by 800 mm from the bottom. The lance 14 is inclined at an angle of about 16°. Ar gas is supplied at a high flow rate of 1 000 to 2 000 Nl/min through the lance 14 to strongly stir the molten steel 6. The composition of the molten steel 6 and its temperature are rendered uniform. The molten steel 6 is heated by an arc again to increase the temperature of the molten steel 6. If required, the ore powder carried by the Ar gas may be sprayed from the ports 24 of the electrodes 20 to reduce the ore upon reaction between the carbon electrodes 20 and the ore, thereby performing composition adjustment of the molten steel 6. The ore may be added through all carbon electrodes 20 or through a single carbon electrode 20. The carrier gas is not limited to Ar gas but can be extended to another inert gas or to nitrogen gas when the molten steel 6 is free from the problem of nitrogen pickup.

**Claims**

1. A process for refining molten steel by an arc process, comprising the following steps:

tapping the molten steel (6) into a refining ladle (2),

dipping carbon electrodes (20) into slag (8) formed on the molten steel (6),

forming an arc between the electrodes (20) and the molten steel (6) to heat the molten steel (6), and

injecting an inert gas into the molten steel (6) during the metallurgical process performed in the ladle (2),

characterized by the following features:

using carbon electrodes (20) each of which is formed as a rod, wherein a gas injection port (24) is formed at a lower end of the rod, and a gas path (22) for supplying a gas to the gas injection port (24) is formed in the rod; and

injecting, from the gas injection port (24) through the gas path (22), the gas carrying a powder or particles of ore containing a component to be added to the molten steel (6) for a predetermined period of time within an arc heating period.

2. The process according to claim 1, characterized in that the gas injected from the injection ports (24) of the electrodes (20) is used having a flow rate of 500 to 4 000 Nl/min and a pressure of $4 \cdot 10^5$ to $2{,}5 \cdot 10^6$ Pa.

3. The process according to claim 1 or 2, characterized in that a gas path (22) is used which is coaxial with the rod.

4. The process according to any of claims 1 to 3, characterized in that an ore is used which is selected from the group consisting of $Nb_2O_5$, $V_2O_5$ and $Cr_2O_5$.

5. The process according to any of claims 1 to 4, characterized in that a reducing agent is used which is selected from the group consisting of Al, Si and C.

6. The process according to any of claims 1 to 5, characterized in that the ore carrying gas injected through the gas path (22) comprises argon gas or another inert gas, or nitrogen when the molten steel (6) is free from the problem of nitrogen pickup.

7. The process according to any of claims 1 to 6, characterized in that additional gas is fed into the molten steel (6) through a lance (12, 14) in order to stir the molten steel (6).

8. The process according to claim 7, characterized in that this gas contains argon.

9. The process according to claims 7 and 8, characterized in that this gas is used at a flow rate of 1 000 to 2 000 Nl/min.

**Patentansprüche**

1. Verfahren zum Frischen von flüssigem Stahl mit einem Lichtbogenverfahren, umfassend die folgenden Schritte:

Abstechen des flüssigen Stahls (6) in eine Frischpfanne (2),

Eintauchen von Kohlenstoffelektroden (20) in auf dem flüssigen Stahl (6) gebildete Schlacke (8),

Ausbilden eines Lichtbogens zwischen den Elektroden (20) und dem flüssigen Stahl (6), um den flüssigen Stahl (6) aufzuheizen, und

Einblasen eines Inertgases in den flüssigen Stahl (6) während der metallurgische Prozeß in der Pfanne (2) durchgeführt wird,

gekennzeichnet durch die folgenden Merkmale:

Verwendung von Kohlenstoffelektroden (20), von denen jede als Stange ausgebildet ist, wobei eine Gaseinblasöffnung (24) am unteren Ende der Stange ausgebildet ist und eine Gasleitung (22) zum Zuführen eines Gases zu der Gaseinblasöffnung (24) in der Stange ausgebildet ist; und

Einblasen, von der Gaseinblasöffnung (24) durch die Gasleitung (22), des Gases, das ein Pulver oder Teilchen von Erz trägt, welches eine dem flüssigen Stahl (6) zuzuführende Komponente enthält, über eine vorgegebene Zeitspanne innerhalb einer Lichtbogenheizperiode.

2. Verfahren nach Anspruch 1, dadurch gekennzeichnet, daß das aus den Einblasöffnungen (24) der Elektroden (20) eingeblasene Gas mit einem Strömungsdurchsatz von 500 bis 4000 Nl/min und einem Druck von $4 \cdot 10^5$ bis $2{,}5 \cdot 10^6$ Pa verwendet wird.

3. Verfahren nach Anspruch 1 oder 2, dadurch gekennzeichnet, daß eine Gasleitung (22) verwendet wird, die koaxial mit der Stange ist.

4. Verfahren nach einem der Ansprüche 1 bis 3, dadurch gekennzeichnet, daß ein Erz verwendet wird, das aus der Gruppe ausgewählt wird, die aus $Nb_2O_5$, $V_2O_5$ und $Cr_2O_5$ besteht.

5. Verfahren nach einem der Ansprüche 1 bis 4, dadurch gekennzeichnet, daß ein Reduktionsmittel verwendet wird, das aus der Gruppe gewählt wird, die aus Al, Si und C besteht.

6. Verfahren nach einem der Ansprüche 1 bis 5, dadurch gekennzeichnet, daß das Erz mit sich führende Gas, welches durch die Gasleitung (22) eingeblasen wird, Argongas oder ein anderes Inertgas oder, wenn bei dem flüssigen Stahl (6) das Problem der Stickstoffaufnahme nicht auftritt, Stickstoff umfaßt.

7. Verfahren nach einem der Ansprüche 1 bis 6, dadurch gekennzeichnet, daß zusätzliches Gas durch eine Lanze (12, 14) in den flüssigen Stahl (6) eingeführt wird, um den flüssigen Stahl (6) zu rühren.

8. Verfahren nach Anspruch 7, dadurch gekennzeichnet, daß dieses Gas Argon enthält.

9. Verfahren nach Anspruch 7 und 8, dadurch gekennzeichnet, daß dieses Gas mit einem Strömungsdurchsatz von 1000 bis 2000 Nl/min verwendet wird.

**Revendications**

1. Un procédé d'affinage de l'acier en fusion par un procédé à arc, comprenant les étapes suivantes:

coulée de l'acier en fusion (6) dans une poche d'affinage (2),

plongée des électrodes de carbone (20) dans le laitier (8) formé sur l'acier en fusion (6),

formation d'un arc entre les électrodes (20) et l'acier en fusion (6) pour chauffer l'acier en fusion (6), et

injection d'un gaz inerte dans l'acier en fusion (6) durant le procédé métallurgique conduit dans la poche (2),

caractérisé par les caractéristiques suivantes:

utilisation des électrodes en carbone (20) ayant chacune la forme d'une baguette, un orifice d'injection de gaz (24) étant formé à une extrémité inférieure de la baguette, et un trajet de gaz (22) pour alimenter un gaz par l'ouverture d'injection de gaz (24) étant formé dans la baguette; et

injection, par l'orifice d'injection de gaz (24) à travers le trajet de gaz (22), du gaz véhiculant une poudre ou des particules de minerai contenant un composant à ajouter à l'acier en fusion (6) pendant une période prédéterminée de temps à l'intérieur d'une région de chauffage à arc.

2. Le procédé selon la revendication 1, caractérisé en ce que le gaz injecté par les orifices d'injection (24) des électrodes (20) est utilisé à un débit de 500 à 4 000 Nl/min et à une pression de $4 . 10^5$ à $2,5 . 10^6$ Pa.

3. Le procédé selon la revendication 1 ou 2, caractérisé en ce que l'on utilise un trajet de gaz (22) qui est coaxial à la baguette.

4. Le procédé selon l'une quelconque des revendications 1 à 3, caractérisé en ce que l'on utilise un minerai qui est choisi dans le groupe comprenant $Nb_2O_5$, $V_2O_5$ et $Cr_2O_5$.

5. Le procédé selon l'une quelconque des revendications 1 à 4, caractérisé en ce que l'on utilise un agent réducteur qui est choisi dans le groupe comprenant Al, Si et C.

6. Le procédé selon l'une quelconque des revendications 1 à 5, caractérisé en ce que le gaz véhiculant le minerai injecté à travers le trajet de gaz (22) comprend de l'argon gazeux ou un autre gaz inerte, ou bien de l'azote lorsque l'acier en fusion (6) ne présente pas de problème de fixation d'azote.

7. Le procédé selon l'une quelconque des revendications 1 à 6, caractérisé en ce qu'un gaz additionnel est alimenté dans l'acier en fusion (6) par une lance (12, 14) en vue d'effectuer l'agitation de l'acier en fusion (6).

8. Le procédé selon la revendication 7, caractérisé en ce que ce gaz contient de l'argon.

9. Le procédé selon les revendications 7 et 8, caractérisé en ce que ce gaz est utilisé à un débit de 1 000 à 2 000 Nl/min.

FIG. 1

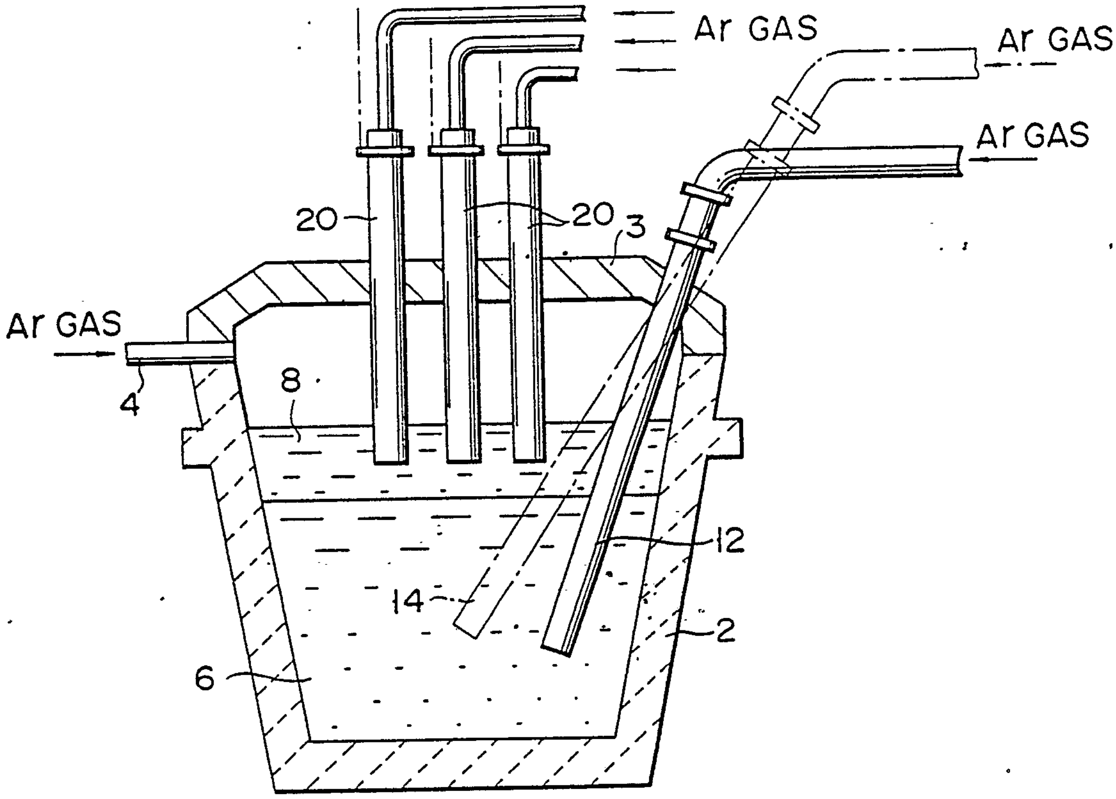


FIG. 2